Europäisches Patentamt

European Patent Office

Office européen des brevets

(11) Publication number: **0 092 146 B1**

# EUROPEAN PATENT SPECIFICATION

(45) Date of publication of patent specification: **14.01.87**

(51) Int. Cl.⁴: **C 02 F 11/12, B 01 J 2/30**

(21) Application number: **83103535.7**

(22) Date of filing: **12.04.83**

(54) Process for dewatering sludge.

(30) Priority: **15.04.82 JP 61750/82**

(43) Date of publication of application:
**26.10.83 Bulletin 83/43**

(45) Publication of the grant of the patent:
**14.01.87 Bulletin 87/03**

(84) Designated Contracting States:
**DE FR GB SE**

(56) References cited:
EP-A-0 019 176
CH-A- 459 081
DE-A- 404 076
DE-A-1 584 982
FR-A-2 490 783
GB-A-1 318 861

(73) Proprietor: **Hitachi Metals, Ltd.
1-2, Marunouchi, 2-chome Chiyoda-ku
Tokyo 100 (JP)**

(72) Inventor: **Shimizu, Hideaki
1-13, Takayanagi
Kumagaya 360 (JP)**
Inventor: **Kofune, Eiichi
450, Niiborishinden
Kumagaya 360 (JP)**
Inventor: **Saitoh, Haruhisa
600, Jurokken
Kumagaya 360 (JP)**
Inventor: **Kobayashi, Katsuya
2-3 Kumagaya
Kumagaya 273-01 (JP)**

(74) Representative: **Strehl, Peter, Dipl.-Ing. et al
Strehl, Schübel-Hopf, Schulz Patentanwälte
Widenmayerstrasse 17 Postfach 22 03 45
D-8000 München 22 (DE)**

EP 0 092 146 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the invention

This invention relates to a process for dewatering sludges of higher water content such as sludges from sewage treatment, industrial waste water treatment, etc.

Recently, these sludges have been more and more produced, and most of the sludges are discarded in a reclaiming area or ocean, or combusted as an ultimate treatment. In the case of discarding sludges, the sludges emit disagreeable odor because they contain much water and are putrescible. Furthermore, the discarding sludges usually have a large weight and a large volume and an enormous cost is required for their transportation, procurement of reclaiming area, etc. For example, sludges having a water content of 90% by weight (water content of sludge in percentage will be hereinafter by weight unless otherwise specially mentioned) is dewatered to water content of 80% and 50%, the weight of the sludges will be to one-third and one-fifth, respectively. Thus, the lower the water content of sludges, the more economical and convenient for discarding the sludges.

In the case of combusting the sludges, an enormous energy is required because of the higher water content of sludges. For example, when one ton of organic sludges having a water content of about 75% is combusted, the necessary heavy oil A amounts to 30—100 l. The lower the water content of sludges, the less the necessary energy for combustion and the more economical also in this case. Particularly, the organic sludges contain combustible matters, and thus when the water content of the sludges is reduced to below about 60%, fuel is required only at their ignition without any supplement of fuel. That is, the sludges can be combusted by their own calories, and this is called spontaneous combustion of sludges.

Furthermore, when the water content of sludges is reduced to below about 45%, the sludges can serve as a heat resource, and the heat released at the combustion of sludges can be utilized in the form of hot water, etc.

The lower the water content of sludges, the more convenient for handling such as transportation, provisional storing, etc., prolonged service life of reclaiming area, saving of fuel, and so forth in discarding and combustion treatments of sludges. Thus, it is quite necessary to reduce the water content of sludges.

Generally, sludges are dewatered and solidified by adding an inorganic modifier such as slaked lime, iron chloride, etc. or an organic modifier such a polymeric flocculant, etc. to sludges, thereby forming of flocs of sludges, and dewatering the flocs by a dehydrator such as gravitational dehydrator, a centrifugal dehydrator, a vacuum dehydrator, a belt press, a filter press, etc. alone or in combination, thereby solidifying the sludges. The thus dewatered and solidified sludges are called primary dewatered sludges.

The primary dewatered sludges have a water content of about 70—about 90%. The primary dewatered sludges obtained by a widely used dehydrator such as a belt press, filter press, etc. has a water content of about 70—about 85%.

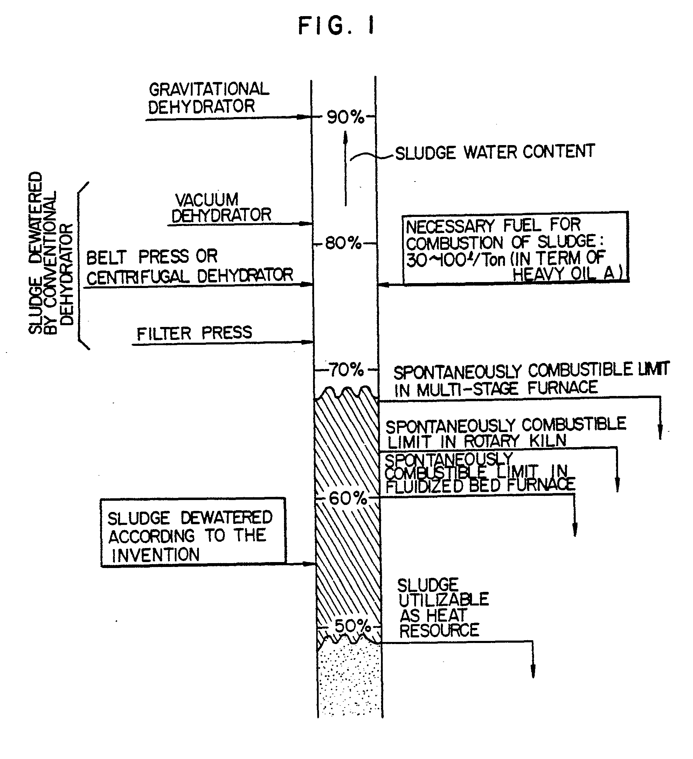

Fig. 1 shows the water content of organic sludges dewatered by said dehydrators, the necessary amount of fuel in terms of heavy oil A for combustion in a sludge combustion furnace, water contents of spontaneously combustible sludges in various sludge combustion furnaces and the water content of sludges serving as a heat resource as a summary.

To convert the primary dewatered sludges having a water content of 70—90% to sludges having a lower water content the primary dewatered sludges have been heretofore heated and dried, or pressed under a high pressure. To heat and dry the sludges has such a disadvantage as consumption of much energy because of the low thermal conductivity of sludges, small aperture of sludges and small contact area with heating air, etc. On the other hand, to press the sludges under a high pressure has such a disadvantage as a clogging phenomenon where the sludges, when pressed, enter filter cloth or fine clearances of fibers of filter paper, etc. and stick fast to the entire surface of filter cloth, filter paper, etc. Thus, mere pressing of the primary dewatered sludges under a high pressure no more reduces the water content of sludges, and is hardly reduced to below 70%.

German patent specification 404 076 discloses a method for dewatering sludge which comprises the steps mentioned in the first part of claim 1. According to that method, the sludge is kneaded and compressed and thereafter pelletized, and the individual sludge pellets are coated with an additive, without coming into contact with each other. It has been found, that a sufficient dewatering cannot be realized by this method.

The object of the present invention is to provide a process for dewatering sludge down to a water content below 60%.

According to the present invention, this object is met by the process defined in claim 1. As an important point of this process, the pelletizing step is carried out under such conditions that the inner structure of the sludge is not substantially destroyed. The process of claim 1 permits dewatering sludge to a water content of less than 60%.

The present process for dewatering sludge will now be described step by step in detail, referring to the drawings.

### Brief description of the drawings

Fig. 1 shows a summary of water contents of sludges dewatered by various dehydrators, the necessary amount of fuel for combustion of sludges, water contents of spontaneously combustible sludges in various combustion furnaces, and the water content of sludges serving as a heat resource.

Fig. 2 is a schematic view of steps in a process

for dewatering sludges according to the present invention.

Fig. 3 is a diagram showing relationship between the amount of incineration ashes added as a dewatering additive and the water content of the resulting secondary dewatered sludges.

Fig. 4 is a schematic view of an embodiment according to the present invention.

Fig. 5 is a schematic presentation of one of the effects attained according to the present invention.

Fig. 6 is a diagram showing drying characteristics of the secondary dewatered sludges obtained according to an embodiment of the present invention and the primary dewatered sludges obtained by a belt press.

Fig. 7 is a diagram showing ignition temperature characteristics of the secondary dewatered sludges obtained according to an embodiment of the present invention and the primary dewatered sludges obtained by a belt press.

Fig. 8 shows bonding states of particles of primary dewatered sludges.

Fig. 9 shows a particle structure of particles of primary dewatered sludges in a slurry-like flowable state.

Fig. 10 is a schematic view showing the mechanism of secondary dewatered sludges according to the present invention.

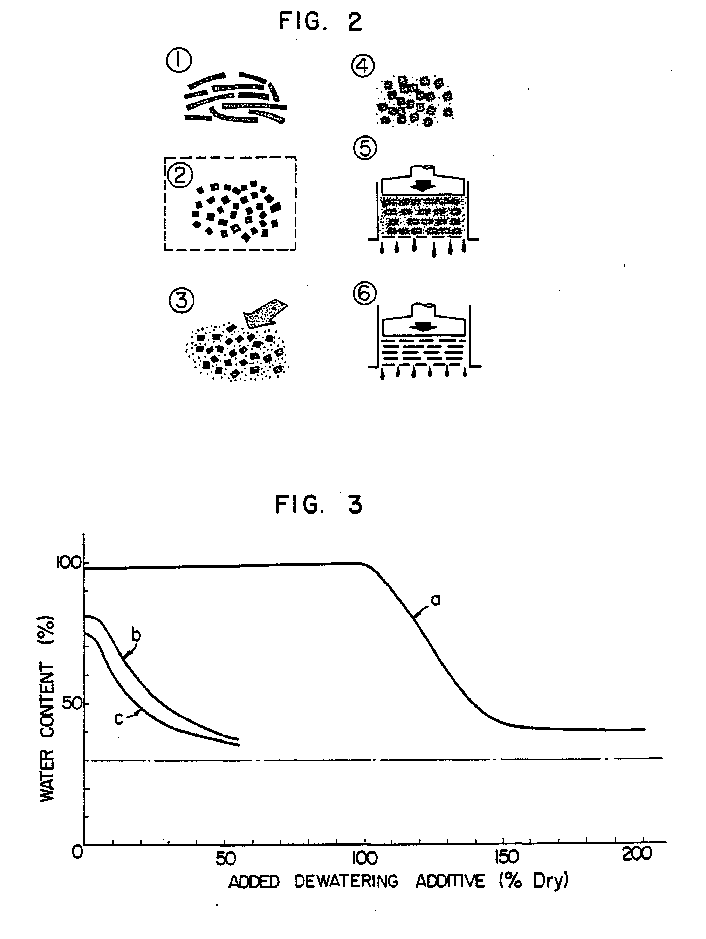

In Fig. 2, the first step is that the primary dewatered sludges obtained by a well known dehydrator such as belt press, filter press, vacuum dehydrator, centrifugal dehydrator, etc. as shown by ① are disintegrated into sludge pellets as shown by ② in a disintegrating pelletizer while preventing kneading of sludges themselves, and at the same time, a dewatering additive in a dry powder state is allowed to deposit mainly on the surfaces of the sludge pellets as shown by ③, and a layer of dewatering additive is formed on the sludge pellets as shown by ④. The sludge pellets having such a layer of dewatering additive are called "conditioned sludge pellets". Actually, the conditioned sludge pellets are prepared more often by continuously charging the primary dewatered sludges and the dewatering additive into the disintegrating pelletizer at the same time than by disintegrating the primary dewatered sludge into sludge pellets at first and then by adding the dewatering additive to the sludge pellets. However, the conditioned sludge pellets obtained by the latter procedure, i.e. by first disintegration of the primary dewatered sludges and successive addition of the dewatering additive have an equal dewatering property. These procedures for prepared conditioned sludge pellets depend entirely upon an efficiency of preparation and have less effects upon the dewatering property of the conditioned sludge pellets as a product. The dewatering property itself depends upon (1) size of conditioned sludge pellets, (2) degree of kneading of sludges themselves, (3) species and mixing ratio of dewatering additive, (4) uniformity of the layer of dewatering additive, etc.

The disintegrating pelletizer for use in preparation of the conditioned sludge pellets includes (1) a cylindrical rotary drum machine with small plate-form or rod-form projections fixed to the inside wall of the drum, (2) a cylindrical rotary drum machine with small plate-form or rod-form projections fixed to the inside wall of the drum, and with a rotary shaft fixed with disintegrating blades provided at the lower part in the drum, where the drum and the shaft are rotated, and (3) a vibration-type disintegrating pelletizer, among which the disintegrating pelletizer of said type (2) is more often used. To prevent the primary dewatered sludges from kneading to a maximum, it is preferable to shred the primary dewatered sludge with blades of sharp edge.

Preferable dewatering additive in a dry powder state for use in the present invention is a dry powder which is insoluble in water and unbreakable against pressing under a high pressure, for example, diatomaceous earth, gypsum, calcium carbonate, incineration ashes, coal powder, bone meal, dried pulp, saw dusts, and soil. These dewatering additives in a dry powder state can be used alone or in mixture of at least two thereof. Among them, the incineration ashes include ashes obtained by incinerating sludges from sewage treatment, night soil treatment, industrial water treatment, town refuse treatment, industrial waste treatment, etc. The incineration ashes are readily available and less industrially reutilizable, and thus are suitable as the dewatering additive. Particularly, to use a portion of ashes obtained by combusting the sludges dewatered according to the present invention as the dewatering additive to recycle the combustion ashes of the dewatering additive is most suitable.

The mixing ratio of the dewatering additive in a dry powder state is 10—100% by weight on the basis of the weight (dry basis) of the primary dewatering sludges. However, an actual mixing ratio of the dewatering additive depends upon the pelletizing and dewatering properties of primary dewatered sludges due to the species of the sludges, and also upon requirements for a lower water content of secondary dewatered sludges or for a smaller weight of secondary dewatered sludges. In most cases, the mixing ratio of the dewatering additive is practically 10—50% by weight on the basis of the weight (dry basis) of primary dewatering sludges.

The size of conditioned sludge pellets must be substantially not more than 20 mm in terms of their outer dimension, and a better dewatering can be obtained when at least 70% by weight of total conditioned sludge pellets is distributed in a range of 1 to 10 mm in terms of their outer dimension. Particularly when the size of conditioned sludge pellets is in a range of 3 to 5 mm in terms of their outer dimension, best dewatering can be obtained. However, preference only to the size of conditioned sludge pellets is liable to increase the number of revolution per minute of the disintegrating blade shaft or the cylindrical drum of a disintegrating pelletizer, or to operate the disintegrating pelletizer for a prolonged time, with the result that the primary dewatering sludges themselves are fully kneaded and the dewatering additive in a dry powder state is not only deposited onto the surfaces of the conditioned sludge pellets, but also kneaded deeply into the conditioned sludge pellets. Once the dewatering additive is kneaded deeply into the conditioned sludge pellets, the dewatering property of the conditioned sludge pellets may be deteriorated, even if the size of conditioned sludge pellets is adequate, and also the amount of the dewatering additive deposited on the surfaces of conditioned sludge pellets may be short, resulting in deterioration of the dewatering property, even if the mixing ratio of the dewatering additive is adequate. Thus, the primary dewatered sludge must be disintegrated and pelletized into sludge particles with a layer of dewatering additive deposited on the surfaces of the sludge pellets, while preventing the primary dewatered sludges themselves from kneading to a maximum and making the sludge particles have a size of 3 to 5 mm in terms of their outer dimension. It is actually difficult to prepare conditioned sludge pellets in a rotary type disintegrating pelletizer without kneading the primary dewatered sludges at all. However, satisfactory sludge pellets can be obtained, for example, under such operating conditions of a disintegrating pelletizer that (1) the number of revolutions per minute of cylindrical drum is 1—4 rpm, (2) the number of revolutions per minute of disintegrating blade shaft is 10—40 rpm, and (3) an operating time is 20—40 seconds.

The second step is that the conditioned sludge pellets prepared as described above are pressed under pressure, as shown by ⑤ in Fig. 2 whereby secondary dewatered sludges having a water content of less than 60% are obtained as shown by ⑥ in Fig. 2.

The pressing under pressure is carried out by placing the conditioned sludge pellets between an upper sheet and a lower sheet of filter cloth and compressing the pellets through thick perforated plates provided on the lower side of the lower sheet of filter cloth and on the upper side of the upper sheet of filter cloth, respectively. The thick perforated plates are provided with a large number of perforations, 2—10 mm in diameter. The compression is carried out in two steps, for example, initially by applying a predetermined pressure thereto over a predetermined time, and successively by applying a higher pressure over a predetermined time. Preferable compression pressure and time are 30 kp/cm², or less, more preferably 15—25 kp/cm², within 5 minutes for the initial compression, and 30—100 kp/cm², more preferably 30—70 kp/cm², within 5 minutes for the successive compression (1 kp/cm²=0.981 bar).

Test results relating to the present invention will be described in detail below.

Fig. 3 shows relationship between the amount of incineration ashes added and the water content of secondary dewatered sludges when the primary dewatered sludges are subjected to secondary dewatering according to the present invention, using incineration ashes from sludges of sewage treatment as the dewatering additive.

When the water content of sludges before the secondary dewatering is 98%, the water content of secondary dewatered sludges keeps the substantially same value as 98%, if the amount of dewatering additive is below 100%, and no effect of secondary dewatering can be observed, as shown by curve a in Fig. 3. The amount of dewatering additive is % by weight on the basis of the weight (dry basis) of sludges to be dewatered, that is, a ratio of weight of added dewatering additive/weight (dry basis) of sludges to be dewatered×100), which will be hereinafter applied unless otherwise specially mentioned.

When secondary dewatering is carried out while keeping the amount of the dewatering additive in a range of 100 to 150%, the water content of secondary dewatered sludges linearly decreases to about 40% with increasing amount of the dewatering additive added. When the amount of the dewatering additive is made to exceed 150%, the water content of secondary dewatered sludges is no more decreased, but kept substantially constant.

When the water content of sludges before the secondary dewatering, that is, the water content of primary dewatered sludges, is 80%, the water content of secondary dewatered sludges is lowered to about 40% by adding about 30% of the dewatering additive thereto, as shown by curve b in Fig. 3. The water content of secondary dewatered sludges is substantially linearly decreased by adding up to 30% of the dewatering additive thereto. The water content of the secondary dewatered sludges can be kept substantially constant by adding 30—50% of the dewatering additive thereto.

When the water content of primary dewatered sludges is 75%, a similar tendency to that of curve b can be obtained, as shown by curve c in Fig. 3, but the water content of secondary dewatered sludge can be reduced to about 40% by addition of only 20% of the dewatering additive.

As described above, when the sludge having a water content as high as 98% before the secondary dewatering is subjected to secondary dewatering with about 130% of the dewatered additive added, the water content can be reduced to about 60%. However, when primary dewatered sludge having a water content of 75—80% is subjected to secondary dewatering according to the present invention, sludges having the water content of about 40% can be obtained by adding only 20—30% of the dewatering additive thereto. Thus, it is practically advantageous and desirable in view of the effect of the secondary dewatering to carry out primary dewatering to make the water content of sludges before the secondary dewatering as low as possible. That is, in view of performance of the now available primary dehydrator and the amount of dewatering additive to be added for the secondary dewatering it is practical to carry out second dewatering of sludges having a water content of 82—83% or less or 85% to a maximum before the secondary dewatering.

Preferred embodiments of the invention.

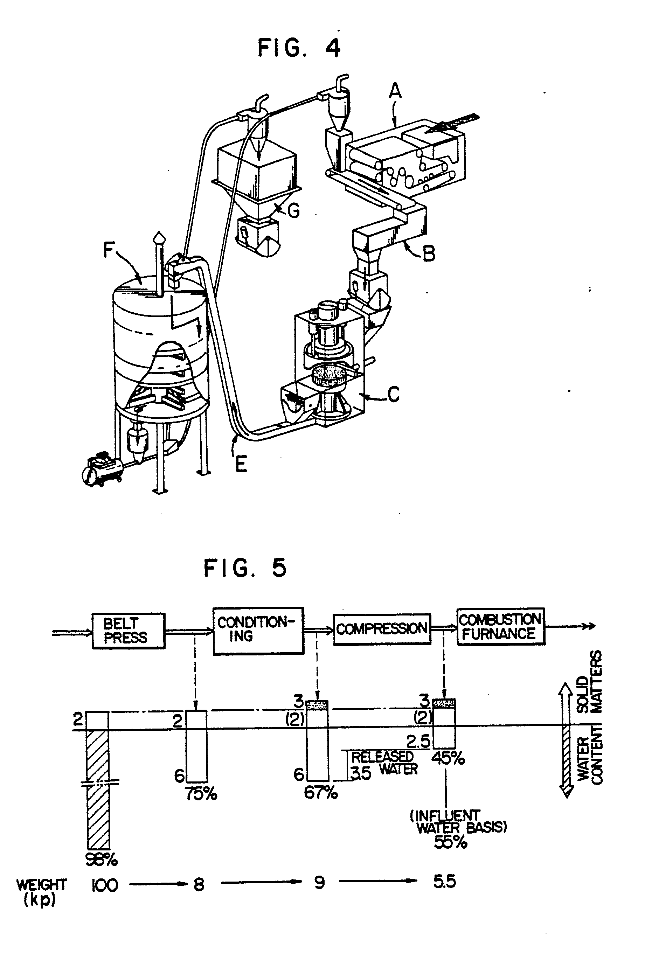

The present invention will be described in detail below, referring to the embodiment shown in Fig. 4.

Slurry material having the water content of about 95% containing organic matters, as settled down and concentrated in water ducts, river, settling pond, etc. is admixed with a modifying agent as a polymeric flocculant. The slurry settled down and concentrated by the addition of the flocculant is supplied to a belt press A shown in Fig. 4 as an example of a primary dehydrator, and pressed between sheets of filter cloth at the belt press, whereby a plate of primary dewatered sludges having a thickness of about 10 mm or less can be obtained. The primary dewatered sludges have a water content of 74—78%, and are supplied to a disintegrating pelletizer B, a cylindrical drum machine with small plate-like or rod-like projections fixed to the inner wall of the cylindrical drum and with a shaft with disintegrating blades provided at the lower part in the drum, where the drum and the shaft are rotated. The disintegrating pelletizer has a drum diameter of 800 mm, a drum length of 1,700 mm, a drum gradient of 4/100, and is operated at a drum revolution of 2—3 rpm, a shaft revolution of 20—30 rpm, a charging rate of primary dewatered sludges of 450 kp/h, and a charging rate of dewatering additive of 50 kp/h (1 kp=9.81 N). The dewatering additive is incineration ashes of sludges incinerated in a sludge incinerator, multi-stage furnace F in Fig. 4. The mixing ratio of the dewatering additive, i.e. incineration ashes, is 50% by weight on the basis of the weight (dry basis) of the primary dewatered sludges.

As described above, the primary dewatered sludges and the incineration ashes are charged into the disintegrating pelletizer B to prepare conditioned sludge pellets. The operating time of the disintegrating pelletizer is 20—40 seconds, but actually, the operating time is a residence time of 20—40 seconds in the disintegrating pelletizer by continuously charging the primary dewatered sludges and the incineration ashes thereto. The thus obtained conditioned sludge pellets are such that at least 70% by weight of total conditioned sludge pellets has sizes of 10 mm or less in terms of their outer dimension and their surfaces are coated with a layer of incineration ashes without substantial kneading of the ashes deep into the pellets.

The conditioned sludge pellets thus prepared in the disintegrating pelletizer B are then supplied to a press C and compressed. The press according to the present embodiment has a ram having a diameter of 1 m, as connected to a piston of an oil-hydraulic cylinder and compresses the material when the piston moves downward. A thick perforated plate having a large number of perforations having a diameter of about 2 mm is provided on the bed of the press, fixed base, and a sheet of filter cloth as used in the well known dehydrator such as a belt press, etc. is laid on the bed, and the conditioned sludge pellets are placed on the sheet of filter cloth. A cylindrical member with a large thickness and a little larger inner diameter than the outer diameter, 1 m, of the ram is detachably provided around the side of the pellets on the sheet of filter cloth. The inner wall of the cylindrical member having the large thickness is slidably engaged with the outer wall of the ram. On the other side, a similar thick perforated plate to that on the fixed base is provided on the lower side of the ram, and a similar sheet of filter cloth is also provided at the lower side of the perforated plate. The conditioned sludge pellets are compressed by moving the ram downward by means of the oil-hydraulic cylinder.

Dewatering filtrate produced at the compression enters the perforations on the upper and lower perforated plates, and is withdrawn through suction by a vacuum pump. The compression by the press is carried out initially under the compression pressure of 15 kp/cm² for the compression time of about 45 seconds, and then under the higher compression pressure of about 30 kp/cm² (1 kp/cm²=0.981 bar) for the compression time of one minute. Such two-step compression can convert the conditioned sludge pellets to a disc-shaped solid sludge having a water content as low as 45%.

The disc-shaped sludge is then simply disintegrated in a disintegrator C, and then charged into a sludge incinerator F, a multi-stage furnace, through a conveyer E, and combusted. A portion of ashes produced by combustion of the disintegrated sludge is applied to a conveyor which pneumatically convey them to the disintegrating pelletizer B. The remainder of ashes is provisionally stored in an ash hopper G and then disposed.

A first effect of the present embodiment will be described below, referring to Fig. 5. Suppose the weight of organic sludges having the water content of 98% as settled down and concentrated be 100 kp (1 kp=9.81 N) where the solid matters amount to 2 kp, and water 98 kp. When the sludges are settled down and concentrated are converted to primary dewatered sludges having the water content of 75% by a belt press, the primary dewatered sludges have the weight of 8 kp, where the solid matters amount to 2 kp, which is equal to that of the solid matters in the sludges as settled down and concentrated without any change, whereas the water amounts to 6 kp. Then, incineration ashes are added to the primary dewatered sludges in an amount of 50% of the solid matters of the primary dewatered sludges, that is, 1 kp. The weight of the thus prepared conditioned sludge pellets is 9 kp, in which the solid matters amount to 2 kp without change, the incineration ashes 1 kg and the water 6 kp.

The conditioned sludge pellets are then compressed under pressure to obtain secondary dewatered sludges having the water content of 45%, where the weight of the secondary dewatered sludge is 5.5 kp, that of added incineration ashes 1 kp, that of the solid matters 2 kp without change, and the water 7.5 kp. The water content of the secondary dewatered sludges is 45%, and that without the added incineration ashes is 55%. The primary dewatered sludges have the water content of 75%, and the weight of 8 kp, whereas the secondary dewatered sludges have the water content of 45% and the weight of 5.5 kp. That is, the water content is reduced to within the spontaneously combustible range and also the weight is decreased. Thus, the sludges are spontaneously combustible and handling of sludges such as storing, transportation, etc. can be facilitated. Furthermore, a smaller furnace can suffice for combustion of the sludges.

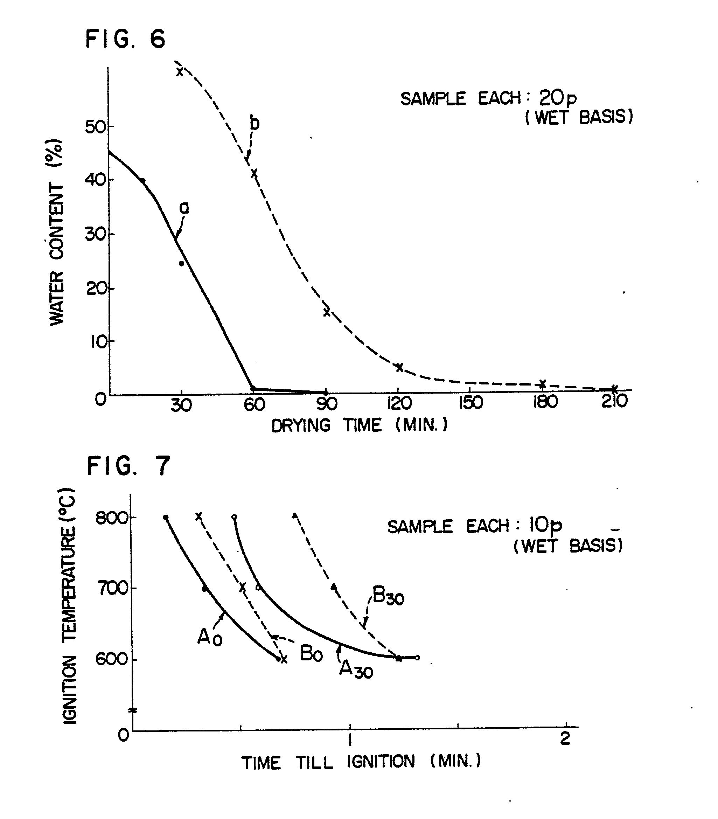

A second effect of the present embodiment will be described below, referring to Fig. 6 and Fig. 7.

Fig. 6 is a diagram showing drying characteristics of the secondary dewatered sludges obtained according to the present embodiment of the invention and the primary dewatered sludges obtained by a belt press, wherein curve $a$ shows relationship between the time and the water content of secondary dewatered sludges having the water content of 45% according to the present invention as placed in a chamber at a temperature of $100° \pm 5°C$, and curve $b$ shows relationship between the time and the water content of primary dewatered sludges having the water content of 75% obtained by a belt press, as placed in a chamber at a temperature of $100° \pm 5°C$. As is obvious from Fig. 6, the time required for reducing the water content of sludges from 40% to 0% is about 75 minutes for the secondary dewatered sludges according to the present invention, and about 150 minutes for the primary dewatered sludges obtained by the belt press, and thus the sludges obtained according to the present invention are more readily driable.

Fig. 7 is a diagram showing ignition temperature characteristics of the secondary dewatered sludges obtained according to the present embodiment of the invention and the primary dewatered sludges obtained by a belt press, wherein curve $A_0$ showing the time required for start to ignite dried sludges when the secondary dewatered sludges having the water content of 45% obtained according to the present invention are dried by heating to dried sludges having the water content of 0%, and the dried sludges are exposed to atmospheres at 800°C, 700°C and 600°C. Naturally, the dried sludges start to ignite more rapidly when exposed to the atmosphere at a higher temperature. Curve $B_0$ shows the time required for start to ignite dried sludges when the primary dewatered sludges having the water content of 75% obtained by a belt press are dried by heating to dried sludges having the water content of 0%, and the dried sludges are exposed to atmospheres at 800°C, 700°C and 600°C. Curves $A_{30}$ and $B_{30}$ show the time required for sludges dried to the water content of 30%, when the secondary dewatered sludges of the present invention and the primary dewatered sludges obtained by a belt press and dried by heating both to the water content of 30% and the dried sludges are exposed to atmospheres at 800°C, 700°C and 600°C.

As is obvious from Fig. 7, the time required for start to ignite the sludges dried by heating to the water content of 0% when exposed to the atmosphere at 600°C is about 42 to 43 seconds, and is equal throughout, irrespectively of whether the sludges before the drying by heating are the secondary dewatered sludges of the present invention or the primary dewatered sludges obtained by a belt press. Likewise, the time required for start to ignite the sludges dried by heating to the water content of 30% when exposed to the atmosphere at 600°C is about 75 to 76 seconds and is equal throughout, irrespectively of whether the sludges before the drying by heating are the secondary dewatered sludges of the present invention or the primary dewatered sludges obtained by a belt press. However, the time required for start to ignite sludges dried by heating to the water content of 0% when exposed to the atmosphere at 700°C is by about 10 seconds shorter for the secondary dewatered sludges of the present invention as the sludges before the drying by heating than for the primary dewatered sludges obtained by a belt press. Likewise, the time required for start to ignite sludges dried by heating to the water content of 0% when exposed to the atmosphere at 800°C is by about 10 seconds shorter for the secondary dewatered sludges of the present invention as the sludges before the drying by heating than for the primary dewatered sludges obtained by a belt press.

The time required for start to ignite sludges dried by heating to the water content of 30% when exposed to the atmospheres at 700°C and 800°C is by about 20 seconds shorter for the secondary dewatered sludges of the present invention as the sludges before the drying by heating than for the sludges obtained by a belt press. That is, the dried sludges of the present invention have a better ignition property than the dried sludges obtained by a belt press.

As described above, the secondary dehydrated sludges obtained according to the present embodiment of the invention have such a second effect as a shorter drying time and a better ignition property than those of the primary dewatered sludges obtained by a belt press. Furthermore, an incinerator for combusting the secondary dewatered sludges of the invention can have a shorter further operating time for igniting the sludges and a smaller space for drying the sludges as additional effects.

A third effect of the present embodiment of the invention will be described below. The secondary dewatered sludges obtained according to the present embodiment of the invention have the following convenient properties for handling.

Since the secondary dewatering is carried out after the addition of incineration ashes, not only the water content can be lowered, but also the disintegration can be readily carried out with less sticking and adhesion, and also the disagreeable odor can be abated. Thus, there are no problems in handling of conveyers, hoppers, etc. when they are transported and provisionally stored.

A fourth effect of the present embodiment of the invention will be described below. The secondary dewatered sludges obtained according to the present embodiment of the invention are spontaneously combustible and readily disintegratable with less sticking and adhesion, and thus can be combusted together with town refuse in town refuse incinerators. In addition, the secondary dewatered sludges of the invention can be combusted in any other combustion furnaces than the sludge incinerator. Furthermore, the secondary dewatered sludges obtained according to the present embodiment of the invention have a low water content and less disagreeable odor, a high disintegration susceptibility and less sticking and adhesion, and thus can be utilized as a fertilizer, a soil-modifying agent and a filler for a reclaiming area.

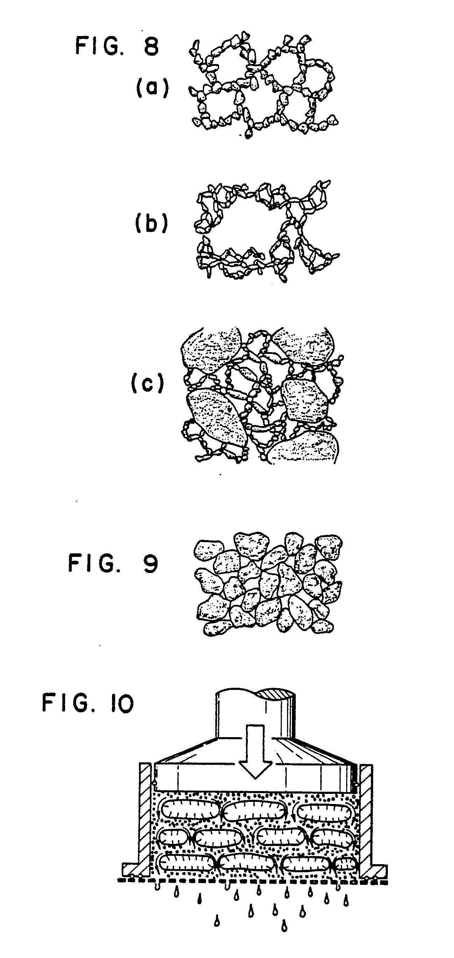

Function of the present process for dewatering sludges will be described in detail below, referring to Fig. 8.

Fig. 8 shows bonding states of particles of primary dewatered sludges. The sludges as settled down and concentrated are generally subjected to primary dewatering after a flocculent is added thereto, and the particles of the primary dewatered sludges are in contact with one another and mutually bonded by the force of the flocculent. The bonding state, as shown by Fig. 8a, b and c has a skeleton structure having inside clearances. The skeleton structure seems to take a honeycomb structure as shown in Fig. 8a, or a pile structure as shown in Fig. 8b or a combination of honeycomb and pile structures as shown by Fig. 8c. This can be presumable from ths fact that the primary dewatered sludges just after the dewatering by a vacuum dehydrator, belt press or filter press are in a thin sheet form, but take a slurry-like flowable state when vibrated or stirred, shown by the particle structure in Fig. 9.

When the primary dewatered sludges are compressed under pressure, the bonding structure of particles of sludges is deformed by the pressure, and also the particle themselves are compressed and deformed. Thus, the clearances among the particles through which the water retained in clearances passes are narrowed, and consequently the transfer rate of water through a sludge layer is extremely lowered. Thus, the dewatering limit of organic sludges has been a water content of 60—70%, and an economical dewatering limit has been the water content of about 70%. However, when sludges just after the primary dewatering is taken out as a piece in the size of about 5 mm in diameter and placed between a few sheets of filter paper and compressed, it has been found that further dewatering can be obtained. On the other hand, when the primary dewatered sludges are stirred or vibrated into a slurry-like flowable state, and then taken out as a piece in the size of about 5 mm in diameter and placed between a few sheets of filter paper and compressed in the same manner as above, it has been found that the particles of sludges enter the fine clearances among the fibers of the filter paper and stick fast to the entire surface of the filter paper, and no more dewatering is impossible to carry out.

Water permeability of a material will be described below. Water permeation rate $Q$ ($cm^3$/sec) of a material, for example, sludges, filter paper, incineration ashes, sands, etc. can be represented as follows:

$$Q = k \cdot A \cdot \Delta h/l$$

wherein

$k$ = water permeability coefficient of a given material ($cm^3/cm^2 \cdot sec$)

$A$ = water-permeable cross-sectional area of a given material ($cm^2$)

$\Delta h$ = difference between the pressure before water premeates through a given material and that thereafter (cm)

$l$ = water-permeable thickness of a given material

Generally, the water permeability coefficient is higher for sand of coarse particles, filter paper, etc., whereas lower for clay of fine particles and sludges, but it also depends upon the clearance ratio among particles, and configuration and arrangement of particles. Clay of fine particles has not only small clearances among particles and a larger frictional resistance to water stream, but also it seems that such a tendency that water itself becomes viscous, differently from the water in the ordinary glass has an influence.

It is estimated that the water permeability coefficient is $10^{-3}$—$10^{-5}$ $cm^3/cm^2 \cdot sec$ for filter paper, incineration ashes, diatomaceous earth, and $10^{-6}$ $cm^3/cm^2$. sec for a layer of sludges. That is, the transfer rate of water through filter paper or a layer of incineration ashes is 10—1,000 times higher than that through a layer of sludges.

Generally, when a uniform pressure is applied to both sides of homogeneous soil layers of various thicknesses, the time required for obtaining the same water content is proportional to second power of the thickness of soil layer.

Mechanism of secondary dewatered sludges will be described below in view of the foregoing facts, referring to Fig. 10.

Sludges of poor water permeability are laid in a thinner layer with smaller particles. For example, the time required for water permeation is made shorter with particles having sizes of 2—5 mm in terms of their outer diameter. The smaller sludge particles are coated with incineration ashes, etc. of high water permeability. This is quite same as the procedure for preparing conditioned sludge pellets from the primary dewatered sludges. When the conditioned smaller sludge particles coated with the incineration ashes of higher water permeability are compressed, the water in the smaller sludge particles permeates through the sludge particles and moves up to the layer of incineration ashes of high water permeability. The water released from the sludge particles passes through water passages in the layer of incineration ashes of high water permeability and released from the conditioned sludge particles.

Even if the primary dewatered sludges are kneaded and then made into smaller particles and even if the surfaces of smaller particles are coated with the incineration ashes to prepare modified sludge particles, the water in the sludge particles is hard to release therefrom up to the layer of incineration ashes, and thus dewatering of such conditioned sludge particles is not satisfactory.

It is seen from the foregoing fact that the secondary dewatering according to the present invention is less effective for the primary dewatered sludges obtained by a centrifugal dehydrator than for those obtained by a belt press and a filter press as a primary dehydrator, because the centrifugal dehydrator seems to knead the sludges at the dewatering rather than the filter press or the belt press.

The two-step compression is effective for the secondary dewatering, because it seems that the water passages through the layer of incineration ashes around the surfaces of sludge particles are not broken owing to gradual application of the pressure to the water passages.

The reason why 130 to 150% by weight of incineration ashes must be added to sludges having the water content of 98% as settled down and concentrated seems to be that the sludges cannot be made into pellets and consequently the water passages cannot be efficiently arranged.

As described above, the present process can produce dewatered sludges having a water content of less than 60% by compressing primary dewatered sludges under pressure.

## Claims

1. A process for dewatering sludge comprising the steps of:
(a) forming sludge pellets,
(b) adding a dewatering additive in a dry powder state to said sludge during or after said pellet-forming step so that said sludge pellets are substantially coated with said additive, and
(c) compressing the sludge pellets,
characterized in that the sludge is dewatered before step (a) to a water content of less than 85% by weight,
that the sludge pellets are formed in step (a) in a disintegrating pelletizer while preventing the sludge from becoming like a slurry, to that the inner structure of said sludge is not substantially destroyed, and
that the water content of the sludge pellets is reduced in step (c) to below 60% by weight.
2. The process according to claim 1, wherein the dewatering additive in a dry powder state is selected from the group consisting of diatomaceous earth, gypsum, calcium carbonate, incineration ashes, coal powder, soil, bone meal, saw dust, and dried pulp.
3. The process according to claim 2, wherein the dewatering additive is incineration ashes.
4. The process according to claim 3, wherein the incineration ashes are obtained by incinerating sludges from sewage treatment, industrial waste water treatment, town refuse treatment and industrial waste treatment, or mixed ashes thereof.
5. The process according to any of claims 1 to 4, wherein the amount of dewatering additive used is by weight 10—100% of the dry weight of the sludge.
6. The process according to any of claims 1 to 5, wherein the sludge pellets have a substantial outer dimension of about 30 mm or less.
7. The process according to any of claims 1 to 6, wherein at least 70% by weight of the sludge pellets have outer dimensions distributed in a range of 1 to 10 mm.
8. The process according to any of claims 1 to 7, wherein the compression step includes a first compression step under a relatively low pressure and a second compression step under a relatively high pressure.
9. The process according to claim 8, wherein the first compression step is carried out under a pressure of about 30 kp/cm² or less for a period of 5 minutes and the second compression step is carried out under a pressure of 30 to 70 kp/cm² (1 kp/cm²=0,981 bar) for a period of 5 minutes.
10. The process according to any of claims 1 to 9, wherein the sludge pellets are formed in a pelletizer having blades of sharp edge.
11. The process according to any of claims 1 to 10, wherein the sludge pellets are compressed between sheets of filter cloth.
12. The process according to any of claims 1 to 11, wherein said inner structure of said sludge contains sludge particles having gaps therebetween, through which gaps water can move to the sludge surface during said compressing step.

## Patentansprüche

1. Verfahren zur Schlammentwässerung, umfassend die folgenden Schritte:
(a) Formen von Schlamm-Pellets,
(b) Hinzufügen eines Entwässerungszusatzes in Form eines trockenen Pulvers zu dem Schlamm während oder nach der Pellet-Formung, so daß die Schlamm-Pellets mit dem Zusatz im wesentlichen überzogen werden, und
(c) Verdichten der Schlamm-Pellets,
dadurch gekennzeichnet,
daß der Schlamm vor dem Schritt (a) auf einen Wassergehalt von weniger als 85 Gew-% entwässert wird,
daß die Schlamm-Pellets im Schritt (a) in einer Verkleinerungs-Pelletiermaschine geformt werden, wobei verhindert wird, daß der Schlamm zu einem dünnflüssigen Brei wird, so daß die innere Struktur des Schlamms nicht wesentlich zerstört wird, und

daß der Wassergehalt der Schlamm-Pellets im Schritt (c) auf unter 60 Gew% reduziert wird.

2. Verfahren nach Anspruch 1, wobei der Entwässerungszustand in Form eines trockenen Pulvers aus der aus Diatomeenerde, Gips, Calciumcarbonat, Verbrennungsasche , Kohlenstaub, Erde, Knochenmehl, Sägemehl, und getrockneter Pulpe bestehenden Gruppe ausgewählt wird.

3. Verfahren nach Anspruch 2, wobei der Entwässerungszusatz Verbrennungsasche ist.

4. Verfahren nach Anspruch 3, wobei die Verbrennungsasche durch Verbrennung von Schlämmen aus der Behandlung von Abwasser, von Industrie-Abwasser, von städtischen Müll und von Industriemüll oder von Gemischen davon gewonnen wird.

5. Verfahren nach einem der Ansprüche 1 bis 4, wobei die Gewichtsmenge an verwendetem Entwässerungszusatz 10 bis 100% des Schlamm-Trochengewichts beträgt.

6. Verfahren nach einem der Ansprüche 1 bis 5, wobei die Schlamm-Pellets eine wesentliche Außenabmessung von etwa 20 mm oder weniger aufweisen.

7. Verfahren nach einem der Ansprüche 1 bis 6, wobei mindestens 70 Gew-% der Schlamm-Pellets im Bereich von 1 bis 10 mm verteilte Außenabmessungen aufweisen.

8. Verfahren nach einem der Ansprüche 1 bis 7, wobei der Verdichtungsschritt einen ersten Verdichtungsschritt unter verhältnismäßig niedrigem Druck und einen zweiten Verdichtungsschritt unter verhältnismäßig hohem Druck umfaßt.

9. Verfahren nach Anspruch 8, wobei der erste Verdichtungsschritt unter einem Druck von etwa 30 kp/cm² oder weniger über eine Dauer von 5 Minuten und der zweite Verdichtungsschritt unter einem Druck von 30 bis 70 kp/cm² (1 kp/cm²=0,981 bar) über eine Dauer von 5 Minuten durchgeführt wird.

10. Verfahren nach einem der Ansprüche 1 bis 9, wobei die Schlamm-Pellets in einer Pelletiermaschine mit scharfkantigen Messern geformt wird.

11. Verfahren nach einem der Ansprüche 1 bis 10, wobei die Schlamm-Pellets zwischen Filtertüchern verdichtet werden.

12. Verfahren nach einem der Ansprüche 1 bis 11, wobei die innere Struktur der Schlamms Schlammpartikel mit dazwischen befindlichen Lücken aufweist, durch die während des Verdichtungsschritts Wasser an die Schlammoberfläche gelangen kann.

**Revendications**

1. Procédé de déshydratation d'une boue comprenant les étapes consistant à:
   (a) former des pastilles de boue,
   (b) ajouter un additif de déshydratation à l'état d'une poudre sèche à ladite boue pendant ou après cette étape de formation de pastilles de manière à ce que ces pastilles de boue soient pratiquement revêtues avec cet additif, et
   (c) comprimer les pastilles de boue, caractérisé en ce que:

— la boue est déshydratée avant l'étape (a) jusqu'à une teneur en eau inférieure à 85% en poids,

— les pastilles de boue sont formées à l'étape (a) dans une pastilleuse à désintégration en évitant que la boue ne se transforme en une bouillie, de façon à ce que la structure interne de cette boue ne soit pas sensiblement détruite, et

— la teneur en eau des pastilles de boue est réduite à l'étape (c) à moins de 60% en poids.

2. Procédé selon la revendication 1, dans lequel l'additif de déshydratation à l'état d'une poudre sèche est sélectionné dans le groupe constitué par la terre de diatomée, le gypse, le carbonate de calcium, des cendres d'incinération, de la poudre de charbon, de la terre, de la farine d'os, de la sciure et de la pâte à papier séchée.

3. Procédé selon la revendication 2, dans lequel l'additif de déshydratation est constitué par des cendres d'incinération.

4. Procédé selon la revendication 3, dans lequel les cendres d'incinération sont obtenues par incinération de boues provenant de traitement des eaux d'égouts, de traitement des eaux résiduelles industrielles, de traitement des ordures ménagères et de traitement des déchets industriels, ou sont des cendres obtenues par mélange de ceux-ci.

5. Procédé selon l'une quelconque des revendications 1 à 4, dans lequel la quantité d'additif de déshydratation utilisé est de 10—100% en poids du poids sec de la boue.

6. Procédé selon l'une quelconque des revendications 1 à 5, dans lequel les pastilles de boue ont une dimension extérieure d'environ 20 mm ou moins.

7. Procédé selon l'une quelconque des revendications 1 à 6, dans lequel au moins 70% en poids des pastilles de boue ont des dimensions extérieures se répartissant dans l'intervalle de 1 à 10 mm.

8. Procédé selon l'une quelconque des revendications 1 à 7, dans lequel l'étape de compression comporte une première étape de compression à pression relativement faible et une seconde étape de compression à pression relativement élevée.

9. Procédé selon la revendication 8, dans lequel l'étape de compression est effectuée sous une pression d'environ 40 Kp/cm² ou moins pendant une période de 5 minutes et en ce que la seconde étape de compression est effectuée sous une pression de 30 à 70 Kp/cm² (1 Kp/cm²=0,981 bar) pendant une période de 5 minutes.

10. Procédé selon l'une quelconque des revendications 1 à 9, dans lequel les pastilles de

boue sont formées de .. .. pastilleuse ayant des lames à bords aiguisés.

11. Procédé selon l'une quelconque des revendications 1 à 10, dans lequel les pastilles de boue sont comprimées entre des toiles de tissue filtrant.

12. Procédé selon l'une quelconque des revendications 1 à 11, dans lequel la structure interne de cette boue contient des particules de boue séparées par des interstices, de l'eau pouvant circuler à travers ces interstices jusqu'à la surface de la boue pendant cette opération de compression.

# FIG. 1

GRAVITATIONAL DEHYDRATOR → 90%

SLUDGE WATER CONTENT

VACUUM DEHYDRATOR → 80%

SLUDGE DEWATERED BY CONVENTIONAL DEHYDRATOR

BELT PRESS OR CENTRIFUGAL DEHYDRATOR →

NECESSARY FUEL FOR COMBUSTION OF SLUDGE: 30~100ℓ/Ton (IN TERM OF HEAVY OIL A)

FILTER PRESS →

70% SPONTANEOUSLY COMBUSTIBLE LIMIT IN MULTI-STAGE FURNACE

SPONTANEOUSLY COMBUSTIBLE LIMIT IN ROTARY KILN

SPONTANEOUSLY COMBUSTIBLE LIMIT IN FLUIDIZED BED FURNACE

SLUDGE DEWATERED ACCORDING TO THE INVENTION → 60%

SLUDGE UTILIZABLE AS HEAT RESOURCE

50%

FIG. 2

FIG. 3

WATER CONTENT (%)

ADDED DEWATERING ADDITIVE (% Dry)

# FIG. 4

# FIG. 5

## FIG. 6

WATER CONTENT (%) vs DRYING TIME (MIN.)

SAMPLE EACH : 20p
(WET BASIS)

## FIG. 7

IGNITION TEMPERATURE (°C) vs TIME TILL IGNITION (MIN.)

SAMPLE EACH : 10p
(WET BASIS)

$A_0$, $B_0$, $A_{30}$, $B_{30}$

FIG. 8

(a)

(b)

(c)

FIG. 9

FIG. 10